# EUROPEAN PATENT SPECIFICATION

(11) **EP 0 342 169 B1**
(45) Date of publication and mention of the grant of the patent: **25.08.1993**
(21) Application number: 89830205.4
(22) Date of filing: 10.05.1989
(51) Int. Cl.: B01D 53/36, C02F 1/78

(54) **Electrolytic ozonizer and method of decomposing ozone-containing waste gas using said ozonizer**
Elektrolytischer Ozonisator und Verfahren zur Zerlegung von Ozonenthaltendem Abgas unter Verwertung dieses Ozonisators
Ozonisateur électrolytique et procédé pour décomposer un gaz résiduaire utilisant cet ozonisateur

(30) Priority: 11.05.1988 JP 114388/88
(43) Date of publication of application: 15.11.1989
(73) Proprietor: Permelec Electrode Ltd, Fujisawa-shi Kanagawa (JP)
(72) Inventor: Nishiki, Yoshinori, Fujisawa-shi Kanagawa (JP); Sawamoto, Isao, Yamato-shi Kanagawa (JP); Nakamatsu, Shuji, Yokohama-shi Kanagawa (JP); Shimamune, Takayuki, Machida-shi Tokyo (JP)
(74) Representative: Pellegri, Alberto

(56) References cited:
- EP-A- 0 281 940
- US-A- 4 836 929

## Description

### FIELD OF THE INVENTION

The present invention relates to an electrolytic ozonizer for treating ozone-containing waste gas, as well as a method of treating ozone-containing waste gas using said ozonizer.

### BACKGROUND OF THE INVENTION

Because of its strong oxidizing power, ozone is extensively used in the treatment of water and air. In particular, ozone is used in the decomposition of organic matter. Commercial methods used today to produce ozone, include the corona discharge of air or oxygen, the electrolysis of water, and the irradiation of air or oxygen with UV light having a specified wavelength.

The corona discharge method was commercialized first since it can be operated with simple equipment and the electric power requirements for production are small. This method is primarily used to disinfect municipal water where large quantities of ozone are needed. However, in order to ensure efficient discharge, the feed gas must be completely dried, and oxygen gas must be used to increase the concentration of the ozone product. The discharge method, therefore, has the drawback that it requires complex facilities to be used in conjunction with the discharge unit. Another problem with the discharge method is that if air is used as the feed gas, noxious gases such NOx will be generated and the fine particulates formed as a result of the consumption of the discharge electrodes will substantially effect the purity of the ozone product.

The irradiation of air or oxygen with ultraviolet rays is incapable of producing ozone in high concentrations.

The electrolytic method uses only pure water as the liquid electrolyte and is capable of producing impurity-free ozone at high concentrations of 10 - 15% by electrolysis. Since the electric power requirements of this method are several times as large as those of the discharge method, its use is limited to small-scale equipment which can be operated at comparatively low cost or power.

In the methods of ozone generation described above, use of the generated ozone product in the treatment of water or air is generally no more than about 90% efficient. Thus, it is necessary to treat the waste gas containing unused ozone.

In an electrolytic ozone generator as described in US-A-4 416 747, a gaseous mixture of ozone and oxygen is evolved at the anode while at the same time, hydrogen gas is evolved at the cathode. Therefore, one of the great problems with this type of ozone generator is how to deal with the ozone-containing waste gas and hydrogen gas that remain after the treatment of a medium. Conventionally, the hydrogen gas is converted to water vapor by combustion with the aid of a hydrogen burning catalyst, whereas the ozone-containing waste gas is separately converted to oxygen with the aid of an ozone decomposition catalyst. These catalysts render the waste gases entirely harmless. However, the ozonizer itself is bulky and requires cumbersome operations.

### SUMMARY OF THE INVENTION

The present invention solves the aforementioned problems occuring with the use of conventional electrolytic methods of ozone generation. Namely, the present invention solves the problems of increased equipment size and complexity of operations due to the need to perform separate treatments on ozone-containing waste gas and hydrogen gas using two different kinds of catalysts.

An object, therefore, of the present invention is to provide an electrolytic ozonizer that is simpler in structure and that is capable of more efficient treatment of waste gases.

Another object of the present invention is to provide a method of treating waste gases using said ozonizer.

The first object of the present invention is attained by an electrolytic ozonizer comprising an electrolytic cell in which oxygen and ozone are evolved in an anode compartment by electrolysis of water, and hydrogen is evolved in a cathode compartment, said anode compartment being connected to a waste gas decomposing section that accommodates a waste gas decomposition catalyst, with a medium treating ozone contactor being interposed between said anode compartment and said waste gas decomposing section, and said cathode compartment being connected to said waste gas decomposing section, with the ozone-containing waste gas which is produced as a result of treatment of said medium in said ozone contactor and said hydrogen gas evolved in the cathode compartment being brought into indirect and direct contact respectively with said catalyst to be converted to a harmless form.

The second object of the present invention is attained by a method of treating waste gases which comprises: evolving oxygen and ozone in an anode compartment of an electrolytic cell by electrolysis of water while evolving hydrogen in a cathode compartment; directing the evolved hydrogen into a waste gas treating section that accommodates a waste gas decomposition catalyst so as to convert said hydrogen to a harmless form by means of said catalyst; bringing said oxygen and ozone into contact with a medium to be treated in an ozone contactor so as to treat said medium; and subsequently directing waste gas containing oxygen and ozone produced as a result of treatment of said medium into said waste gas treating section where they are brought into indirect contact with said catalyst so that the ozone in said waste gas is converted to harmless form.

### BRIEF DESCRIPTION OF THE DRAWINGS

Fig. 1 is a flowchart showing the outline of procedures for treating a medium and ozone-containing waste gas by the method of the present invention;
Fig. 2 is a longitudinal section showing an example of the waste gas treating section of the electrolytic ozonizer of the present invention; and

### DETAILED DESCRIPTION OF THE INVENTION

In their efforts to solve the problems of conventional electrolytic methods of ozone generation, the present inventors noted the fact that the heat of conversion (combustion or oxidation) of hydrogen gas evolved in the cathode compartment of an electrolytic ozonizer can be effectively used to decompose ozone. The principles of the method and apparatus of the present invention are based on this fact and are characterized in that a waste gas which contains ozone generated by electrolysis and which results from the treatment of a medium is treated simultaneously with hydrogen gas, also generated by electrolysis, without the use of two different kinds of catalysts or two types of gas converting apparatuses.

Hydrogen gas evolved in the cathode compartment of an electrolytic ozonizer can explode in a closed space if it is immediately released into an air atmosphere. Therefore, it is converted to non-hazardous water by conversion with a catalyst. This reaction is expressed by H₂ + 1/2O₂ → H₂O and generates heat of as much as 286 x 10³ Joule (68.3 kcal). The temperature of combustion, which varies with the type of catalyst used or the amount of hydrogen evolved, will reach 200 - 500°C under normal conditions of burning (i.e., hydrogen is supplied into 50 mℓ of catalyst at a flow rate of 5 mℓ/sec.) If the ozone-containing waste gas is heated at this temperature, ozone will be decomposed in a few seconds to be converted to oxygen (2O₃ → 3O₂). This principle is used in the present invention, in which ozone-containing waste gas is directed into the neighbourhood of a hydrogen gas conversion catalyst so that the ozone in the waste gas is decomposed by the heat of conversion (combustion) of hydrogen gas.

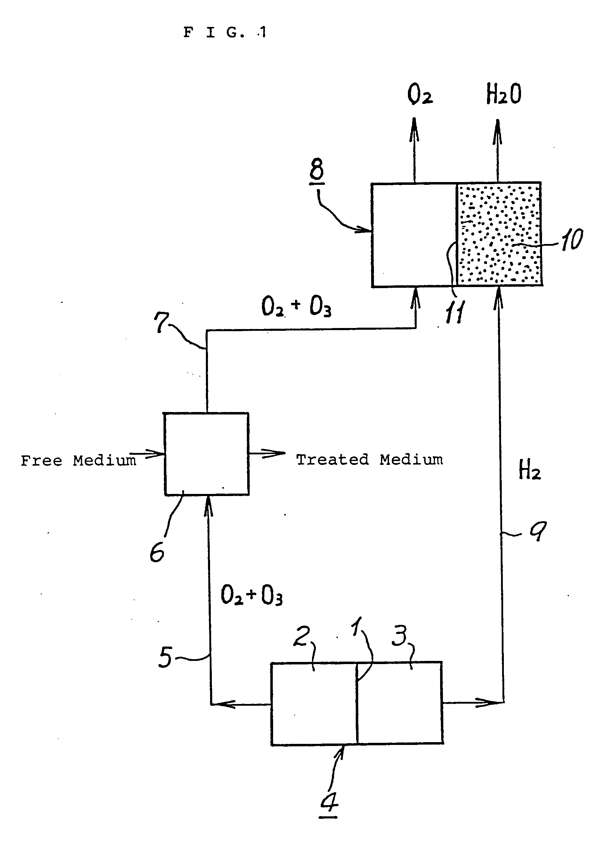

The outline of the procedures for treating a medium and ozone-containing waste gas are shown in flowchart in Fig. 1. The basic operation of the method and apparatus of the present invention are described hereinafter with reference to Fig. 1.

When water is electrolyzed in an electrolytic cell 4 consisting of an anode compartment 2 and a cathode compartment 3 separated by a diaphragm 1, a gaseous mixture of ozone and oxygen is evolved in the anode compartment 2 whereas hydrogen gas is evolved in the cathode compartment 3. The mixture of ozone and oxygen gases flows through a conduit 5 into an ozone contactor 6 where it makes contact with a medium to be treated such as municipal water. The waste gas having a reduced ozone concentration flows through a conduit 7 into a waste gas decomposing section 8. The hydrogen gas evolved in the cathode compartment 3 flows through a conduit 9 into that portion of the waste gas decomposing section 8 which is filled with a hydrogen conversion catalyst 10. With the aid of the catalyst 10, the hydrogen gas is burnt to be converted to water vapor. The heat of combustion is transmitted through a diaphragm 11 to decompose the ozone in the waste gas, thereby generating oxygen. The structure of the waste gas decomposing section 8 is not limited to the one shown in Fig. 1.

The electrolytic cell 4 for ozone generation in the present invention may be of any conventional type, such as a dimensionally stable anode separated from a nickel cathode by a fluorinated ion-exchange membrane, or a solid polymer electrolyte (SPE) composed of a fluorinated ion-exchange membrane coated on both sides with an electrode active material such as a lead dioxide power or a platinum powder.

When water is electrolyzed using the electrolytic cell described above, oxygen gas containing a small amount of ozone is evolved in the anode compartment whereas hydrogen gas is evolved in the cathode compartment. The ozone-containing oxygen gas flows through a suitable conduit into an ozone contactor where it makes contact with a medium to be treated, such as municipal water to be disinfected. The conduit connecting the anode compartment with the ozone contactor is preferably sealed to prevent contamination by foreign matter. The ozone-containing gas, an ozone concentration of which may reach to 10⁵ ppm, is corrosive, so that the conduit is made of a corrosion-resistant material, preferably titanium or glass.

The ozone-containing waste gas resulting from the ozone treatment of the medium contains from about 0.1 to 10⁴ ppm of ozone and is also corrosive, so that it is preferably directed to the waste gas decomposing section through a titanium conduit.

Leakage of the hydrogen gas evolved in the cathode compartment of the electrolytic cell may cause explosion, so that it is preferably directed into the waste gas decomposing section through a sealed conduit.

Nickel, palladium, platinum or various other conventional materials may be used as the hydrogen conversion (combustion) catalyst in the present invention and a suitable catalyst may be selected in accordance with the specific type of equipment and operating conditions. A palladium-based catalyst is preferred since it does not require any special treatment such as heating.

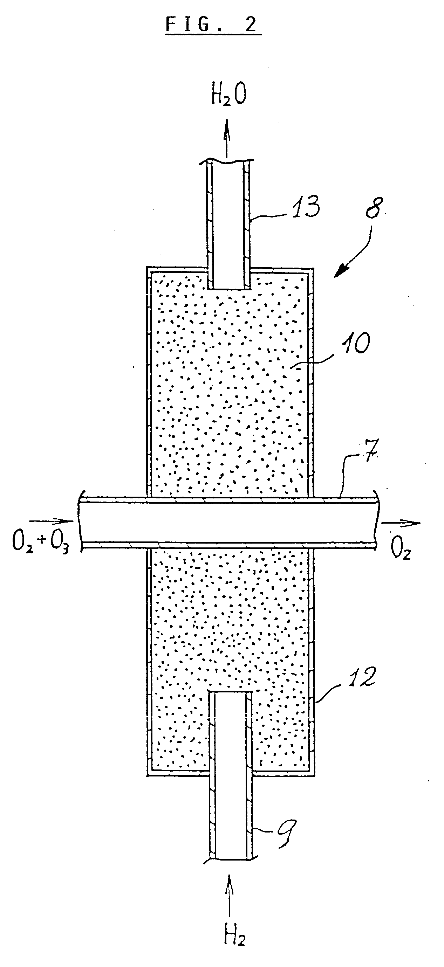

The shape and structure of the waste gas decomposing section are not limited in any particular way as long as the following requirements are met: the hydrogen gas introduced makes contact with the hydrogen conversion catalyst in it so that it is converted to water vapor, and the heat generated upon this conversion allows the ozone in the simultaneously introduced ozone-containing waste gas to be nearly completely converted to oxygen gas An example of the waste gas decomposing section is shown in Fig. 2;

The hydrogen conversion catalyst 10 is packed in a cylinder 12, into which a conduit 9 for hydrogen gas is partly inserted from the bottom. The hydrogen reacts in the cylinder 12 to form water vapor, which is released into air atmosphere through a discharge pipe 13 extending from the top of the cylinder 12. A conduit 7 for ozone-containing waste gas penetrates transversely through the middle of the cylinder 12. Ozone-containing waste gas makes indirect contact with the catalyst 10 via the wall of the conduit 7 and the heat generated by combustion of hydrogen gas allows the ozone in the ozone-containing waste gas to be converted to oxygen. The outer surfaces of the conduits that contact the catalyst 10 are preferably clad with copper or a copper alloy. In another example of the waste gas decomposing section, the conduit for ozone-containing waste gas may be wound helically around the portion which is filled with the hydrogen conversion catalyst.

The following example is provided for the purpose of further illustrating the present invention but is in no way to be taken as limiting.

### EXAMPLE 1

An electrolytic cell for an electrolytic ozonizer was fabricated using the following components: an anode current collector in the form of titanium mesh; a cathode current collector in the form of nickel mesh; a solid polymer electrolyte (Nafion 117) coated on one side with a paste prepared by mixing a lead oxide (i.e., an anode catalyst having high ozone generating ability) and an aqueous polytetrafluoroethylene (PTFE) suspension (30J), and on the other side with a paste prepared by mixing a platinum powder (i.e., a cathode catalyst) and an aqueous PTFE suspension (30J), said electrolyte being rolled into sheet form at a pressure of 100 kg/cm² and at a temperature of 100°C; and a titanium anode and a SUS 304 cathode, each having an area of 45 cm². These components were assembled into the electrolytic cell. When ion-exchanged water supplied into the anode compartment was electrolyzed with a current of 45A being applied (density, 100 A/dm²), wet oxygen gas containing 15 wt% ozone was evolved at the anode at a rate of about 9 ℓ/h (equivalent to ozone generation of about 2 g/h). Wet hydrogen gas was evolved at the cathode at a rate of about 19 ℓ/h.

The evolved hydrogen gas was introduced into a cylinder in mesh form (capacity, 30 mℓ) containing 25 g of a combustion catalyst that had 0.5 wt% palladium supported on 3-mmφ alumina particles having specific surface areas of 200 to 300 m²/g. The temperature measured at the central portion of the cylinder was 360°C.

The gaseous mixture of ozone and oxygen which was evolved in the anode compartment was introduced through a glass filter (0.5 µm) into a tank of municipal water, where tiny bubbles of the mixed gas were brought into contact with the municipal water to form ozonized water. Ninety-five percent of ozone in the mixed gas was absorbed and dissolved in the municipal water whereas 5% of ozone remained in the vapor phase. The concentration of residual ozone was equivalent to 5,000 ppm.

The resulting ozone-containing waste gas was introduced into a copper clad titanium pipe in the catalyst-filled cylinder of the type shown in Fig 2. The titanium pipe had a diameter of 10 mm, with the copper cladding being 1 mm thick. After contact for 3 seconds, the concentration of ozone at the exit of the cylinder dropped to 0.1 ppm.

In the electrolytic ozonizer of the present invention, water is electrolyzed in an electrolytic cell and the gaseous mixture of ozone and oxygen that is evolved in the anode compartment is used to treat a medium such as water. The resulting ozone-containing waste gas as well as the hydrogen gas evolved in the cathode compartment are introduced into a single waste gas decomposing section, where ozone is converted to harmless oxygen and the hydrogen gas to water vapor.

The waste gas decomposing section is filled with nothing but a hydrogen conversion catalyst. However, when water vapor is produced by combustion of hydrogen, a sufficient amount of heat to convert ozone to oxygen is released so that ozone can be rendered harmless in an indirect way without employing any separate ozone decomposing section filled with an ozone decomposition catalyst.

## Claims

1. An electrolytic ozonizer comprising:
an electrolytic cell (4) in which oxygen and ozone are evolved in an anode compartment (2) by electrolysis of water, and hydrogen is evolved in a cathode compartment (3),
a waste gas decomposing section (8) being connected to said anode compartment (2) of said electrolytic cell (4) and being connected to said cathode compartment (3), wherein said waste gas decomposing section (8) comprises a hollow member (12) filled with a hydrogen conversion catalyst (10), said hollow member comprises a conduit (7) for passage of the ozone containing waste gas, and said conduit penetrates said hollow member (12) transversely in such a way that said ozone containing waste gas in the conduit (7) makes indirect contact with said catalyst (10) via the wall of said conduit (7);
an ozone contactor (6) for treating a medium with the said oxygen and ozone gas evolved in the anode compartment (2) of the water electrolyte, said contactor (6) being interposed between said anode compartment (2) and said waste gas decomposing section (8);
wherein ozone-containing waste gas which is produced as a result of treatment of a medium in said ozone contactor (6) and said hydrogen gas evolved in said cathode compartment (3), are converted to a harmless form.

2. A method of treating of waste gas from an electrolytic ozoniser comprising the steps of:
evolving oxygen and ozone in an anode compartment of an electrolytic cell by electrolysis of water while evolving hydrogen in a cathode compartment;
directing the evolved hydrogen into a waste gas treating section that contains a hydrogen conversion catalyst so as to convert said hydrogen into a harmless form by means of said catalyst;
bringing said oxygen and ozone into contact with a medium to be treated in an ozone contactor so as to treat said medium;
and
directing waste gas containing oxygen and ozone produced as a result of treatment of said medium into said waste gas treating section where they are brought into indirect contact with said catalyst so as to decompose ozone in said waste gas with heat generated by conversion of said hydrogen to produce oxygen.

## Patentansprüche

1. Elektrolytischer Ozonisator, umfassend:
eine elektrolytische Zelle (4), in der Sauerstoff und Ozon in einem Anodenraum (2) durch Wasserelektrolyse erzeugt werden und Wasserstoff in einem Kathodenraum (3) entsteht, ein Abgaszersetzungsabschnitt (8), der mit dem Anodenraum (2) der elektrolytischen Zelle (4) verbunden ist und mit dem Kathodenraum (3) verbunden ist, wobei der Abgaszersetzungsabschnitt (8) ein mit einem Wasserstoffumsetzungskatalysator (10) gefülltes Hohlteil (12) und das Hohlteil eine Leitung (7) zur Führung des ozonhaltigen Abgases umfaßt und wobei die Leitung das Hohlteil (12) quer durchdringt, so daß das ozonhaltige Abgas in Leitung (7) indirekt mit dem Katalysator (10) über die Wand der Leitung (7) in Kontakt steht;
einen Ozonkontaktor (6) zur Behandlung eines Mediums mit dem im Anodenraum (2) aus dem Elektrolytwasser entwickelten Sauerstoff und Ozongas, wobei der Kontaktor (6) zwischen dem Anodenraum (2) und dem Abgaszersetzungsabschnitt (8) angeordnet ist;
wodurch das im Ergebnis der Behandlung eines Mediums in dem Ozonkontaktor (6) erzeugte Abgas und das im Kathodenraum (3) erzeugte Wasserstoffgas in eine ungefährliche Form umgewandelt werden.

2. Verfahren zur Behandlung von Abgas aus einem elektrolytischen Ozonisator umfassend die Schritte:
Entwickeln von Sauerstoff und Ozon in einem Anodenraum einer Elektrolysezelle durch Wasserelektrolyse, während Wasserstoff im Kathodenraum erzeugt wird;
Einleiten des entwickelten Wasserstoffs in einen Abgasbehandlungsabschnitt, der einen Wasserstoffumsetzungskatalysator enthält, so daß Wasserstoff in eine ungefährliche Form durch den Katalysator umgewandelt wird;
Inkontaktbringen des Sauerstoffs und des Ozons mit einem zu behandelnden Medium in einem Ozonkontaktor zur Behandlung des Mediums; und
Einleiten des sauerstoff- und ozonhaltigen Abgases, das als Ergebnis der Behandlung des Mediums anfällt, in den Abgasbehandlungsabschnitt, wo sie in indirektem Kontakt mit dem Katalysator gebracht werden, so daß das Ozon in dem Abgas mit der bei der Umsetzung von Wasserstoff entwickelten Wärme zu Sauerstoff umgesetzt wird.

## Revendications

1. Ozoniseur électrolytique comprenant :
une cellule d'électrolyse (4) dans laquelle de l'oxygène et de l'ozone se dégagent dans un compartiment anode (2) par électrolyse d'eau et de l'hydrogène se dégage dans un compartiment cathode (3),
une section de décomposition de gaz perdu (8) reliée audit compartiment anode (2) de ladite cellule d'électrolyse (4) et reliée audit compartiment cathode (3), ladite section de décomposition du gaz perdu (8) comprenant un élément creux (12) empli d'un catalyseur convertissant l'hydrogène (10), ledit élément creux comprenant un conduit (7) destiné au passage du gaz perdu contenant de l'ozone, et ledit conduit pénétrant dans ledit élément creux (12) transversalement de telle sorte que ledit gaz perdu contenant de l'ozone dans le conduit (7) entre en contact indirect avec ledit catalyseur (10), par l'intermédiaire de la paroi dudit conduit (7) ;
un contacteur à ozone (6) destiné au traitement d'un milieu par lesdits gaz oxygène et ozone dégagés dans le compartiment anode (2) de l'électrolyte aqueux, ledit contacteur (6) étant interposé entre ledit compartiment anode (2) et ladite section de décomposition du gaz perdu (8) ;
dans lequel le gaz perdu contenant de l'ozone, produit à la suite du traitement d'un milieu dans ledit contacteur à ozone (6), et ledit hydrogène gazeux dégagé dans ledit compartiment cathode (3) sont convertis en une forme inoffensive.

2. Procédé de traitement d'un gaz perdu provenant d'un ozoniseur électrolytique, comprenant les étapes de :
dégagement d'oxygène et d'ozone dans un compartiment anode d'une cellule d'électrolyse par électrolyse d'eau, avec dégagement simultané d'hydrogène dans un compartiment cathode ;
envoi de l'hydrogène dégagé dans une section de traitement de gaz perdu contenant un catalyseur convertissant l'hydrogène, de façon à convertir ledit hydrogène en une forme inoffensive au moyen dudit catalyseur ;
mise en contact dudit oxygène et dudit ozone avec un milieu à traiter dans un contacteur à ozone, de façon à traiter ledit milieu ; et
envoi du gaz perdu contenant de l'oxygène et de l'ozone, produits à la suite du traitement dudit milieu, dans ladite section de traitement du gaz perdu où ils sont mis en contact indirect avec ledit catalyseur, de façon à décomposer l'ozone dans ledit gaz perdu par la chaleur dégagée lors de la conversion dudit hydrogène, pour produire de l'oxygène.
